# EUROPEAN PATENT APPLICATION

(11) **EP 3 016 431 A1**
(43) Date of publication of application: **04.05.2016**
(21) Application number: 14818540.8
(22) Date of filing: 26.06.2014
(51) Int. Cl.: H04W 28/04, H04W 84/20

(54) **METHOD AND DEVICE FOR TRANSMITTING DATA**

(30) Priority: 26.06.2013 US 201361839632 P
(71) Applicant: Samsung Electronics Co., Ltd., Gyeonggi-do 16677 (KR)
(72) Inventor: CHOI, Jongmu, Seongnam-si Gyeonggi-do 463-867 (KR); LEE, Sunghee, Suwon-si Gyeonggi-do 443-796 (KR); KIM, Changsoon, Suwon-si Gyeonggi-do 442-703 (KR)
(74) Representative: Jenkins, Richard Gavin
(86) International application number: PCT/KR2014/005715
(87) International publication number: WO 2014/209044

(57) **Abstract**

The present invention relates to a method, a device, and a system for supporting data communication which can ensure data transmission and channel efficiency having high reliability among a plurality of electronic devices that constitute a network. The data communication method of an electronic device, according to one embodiment of the present invention, comprises the steps of: selecting a leader among other electronic devices within a network; transmitting data to the other electronic devices within the network; determining whether an acknowledgement (ACK) corresponding to the data transmission is received from an electronic device selected as the leader; and retransmitting the data depending on whether the acknowledgement (ACK) is received, or waiting for the next data transmission.

## Description

### Technical Field

The present invention relates to a method and device for transmitting data between a plurality of electronic devices configuring a network with high reliability and for guaranteeing the channel efficiency.

### Background Art

In general, a Wireless Local Area Network (WLAN), e.g., a network based on Wireless-Fidelity (Wi-Fi), is used in two modes that are divided according to the operation states. For example, a WLAN employs an Infrastructure mode and an Ad-hoc (or Independent Basic Service Set (IBSS)) mode. Electronic devices such as laptop computers mainly operate in an infra-structure mode that allows them to access an Access Point (AP) and to use the Internet. Embedded platforms (e.g., smartphones, PDA, PSP, portable game terminals, digital cameras, etc.) simultaneously use the infra-structure mode/ad-hoc mode. In ad-hoc mode, a group communication network can be configured between electronic devices without an AP using Wi-Fi technology.

When data is transmitted between electronic devices over a WLAN, multicast is mainly used for services irrelevant to loss of data (packets), e.g., a video streaming service, etc. For a service requiring a high level of reliability, unicast is used to transmit data to receiving electronic devices respectively, instead of using multicast.

### Disclosure of Invention

### Technical Problem

The unicasting method is disadvantageous in that, as the number of electronic devices to transmit data (e.g., the number of electronic devices to receive data) increases, the amount of data also increases in proportion to the increase in number of electronic devices and thus the overall efficiency of the limited radio resources decreases. Since the multicast method transmits data to respective receiving electronic devices not individually but simultaneously, it can efficiently use radio resources that are limited. However, the multicast method is disadvantageous in that: since a particular receiving electronic device is not designated, the bit rate for data transmission cannot be set; and, since an acknowledgement (ACK) cannot be received, the reliability of data transmission is low.

The embodiments of the present invention provide a method of transmitting data between electronic devices configuring a network in multicast mode and increasing the reliability of the multicast mode, and an electronic device supporting the method.

The embodiments of the present invention further provide a method for an electronic device to transmit data to a plurality of other electronic devices over a network in reliable multicast mode, instead of unicast mode, and to increase the channel efficiency, and an electronic device supporting the method.

The embodiments of the present invention further provide a method of implementing an optimal environment to support data communication between a plurality of electronic devices configuring a network, efficiently using limited radio resources, and increasing the reliability of data transmission and the efficiency of data transmission, and an electronic device adapted to the method.

### Solution to Problem

In accordance with embodiments of the present invention, the present invention provides a data transmission method of electronic devices configuring a group network comprising: selecting, as a leader, one from other electronic devices in the network; transmitting data to the other electronic devices on the network; determining a condition as to whether an acknowledgement (ACK) corresponding to the transmission of data is received from the electronic device selected as a leader; and performing re-transmission of the data or waiting for transmission of the next data, according to the condition as to whether an acknowledgement (ACK) has been received.

In accordance with embodiments of the present invention, the present invention provides a computer-readable recording medium storing software for executing the data communication method in a processor.

In accordance with embodiments of the present invention, the present invention provides a computer-readable recording medium storing software for executing the following: selecting, as a leader, one from other electronic devices in a network; transmitting data to the other electronic devices on the network; determining a condition as to whether an acknowledgement (ACK) corresponding to the transmission of data is received from the electronic device selected as a leader; and performing re-transmission of the data or waiting for transmission of the next data, according to the condition as to whether an acknowledgement (ACK) has been received.

In accordance with another embodiment of the present invention, the present invention provides an electronic device comprising: a wireless communication unit for supporting data communication over a network; a storage unit for storing one or more programs related to the data communication; and a controller comprising one or more processors for executing one or more programs to control data communication of electronic devices on the network. One or more programs perform: selecting, as a leader, one from other electronic devices in a network; transmitting data to the other electronic devices on the network; determining a condition as to whether an acknowledgement (ACK) corresponding to the transmission of data is received from the electronic device selected as a leader; and performing re-transmission of the data or waiting for transmission of the next data, according to the condition as to whether an acknowledgement (ACK) has been received.

In accordance with another embodiment of the present invention, the present invention provides a data communication system comprising: an initiator for triggering data; a transmitter for performing transmission of data; one or more receivers for receiving the data transmitted from the transmitter; and a leader for receiving the data transmitted from the transmitter and transmitting, to the transmitter, the acknowledgement (ACK) in response to the reception of the data.

Based on the contents described above, the following description will explain various embodiments of the present invention so that the skilled person in the art can easily understand the features and advantages of the various embodiments of the present invention. The additional features and advantages of the present invention forming the subject matter and the claims of the present invention will become more apparent from the following detailed description.

### Advantageous Effects of Invention

The electronic device and the operation method thereof according to various embodiments of the present invention perform transmission of data between electronic devices configuring a network in multicast mode, thereby increasing the reliability of the multicast mode. The embodiments allow an electronic device to transmit data to a plurality of other electronic devices over a network in reliable multicast mode, instead of unicast mode, thereby increasing the channel efficiency.

The embodiments of the present invention can perform data transmission in multicast mode with a high level of reliability, and thus can efficiently use limited radio resources, compared with conventional unicast mode. The embodiments of the present invention can increase the level of reliability in data transmission to a level of reliability corresponding to the unicast mode, compared with the general multicast mode, and can maximize the efficiency when transmitting the data to a plurality of electronic devices over a network.

### Brief Description of Drawings

Fig. 1 is a schematic block diagram showing the configuration of an electronic device according to an embodiment of the present invention;
Fig. 2 is a diagram showing an example of a network environment including electronic devices according to an embodiment of the present invention;
Fig. 3 is a diagram showing another example of a network environment including electronic devices according to an embodiment of the present invention;
Fig. 4 is a diagram showing still another example of a network environment including electronic devices according to an embodiment of the present invention;
Figs. 5 and 6 are diagrams showing data communication operations in a network according to an embodiment of the present invention;
Figs. 7 and 8 are diagrams showing data communication operations in a network according to an embodiment of the present invention;
Fig. 9 is a diagram showing a format of frame used for data communication according to an embodiment of the present invention;
Fig. 10 is a flow diagram showing a method of transmitting data in an electronic device according to an embodiment of the present invention; and
Fig. 11 is a flow diagram showing a method of transmitting data in an electronic device according to an embodiment of the present invention.

### Mode for the Invention

Hereinafter, various embodiments of the present invention will be described with reference to the accompanying drawings. The same reference numbers are used throughout the drawings to refer to the same or similar parts. Detailed descriptions of well-known functions and structures incorporated herein may be omitted to avoid obscuring the subject matter of the invention.

The present invention relates to a method of performing data communication between electronic devices in a network managed based on a Wireless Local Area Network (WLAN) (e.g., a network based on Wireless-Fidelity (Wi-Fi)) and to an electronic device adapted to the data communication method. The embodiments of the present invention allow an electronic device to transmit data to a plurality of other electronic devices in a network in reliable multicast mode, instated of in unicast mode, thereby increasing the channel efficiency. In various embodiments of the present invention, the network may employ a Wi-Fi technology and include a network based on Infrastructure mode, Ad-hoc mode, or Independent Basic Service Set (IBSS) mode, and additional networks.

The network according to various embodiments of the present invention may provide access of a link level for the user of a mobile-based electronic device that creates an instant network without infrastructure. According to an embodiment, a user may create an ad-hoc network and other users may connect to (assess) the ad-hoc network. The network may not have a master device. The network may be not destroyed but maintained until all the users escape (secede) therefrom. The network may allow the network entities to operate each other in multicast or broadcast mode. The multicast or broadcast mode may support mobile hotspot mode and/or IBSS mode.

According to embodiments of the present invention, from among a plurality of electronic devices connected to each other in a network, a transmitter that multicasts data determines a leader that provides an acknowledgement (ACK) in response to the reception of data, and the electronic device determined as a leader responds to the reception of data by ACK, thereby increasing the reliability of data transmission on the network. According to embodiments of the present invention, when the transmitter ascertains that a specified condition has been satisfied, it terminates the leadership from an electronic device that has been determined as a leader and may select, as a new leader, one of the plurality of electronic devices on the network.

In general, the recent Wi-Fi technology has not supported a function of acknowledging the reception of data transmitted in multicast mode. The embodiments of the present invention check a plurality of electronic devices that belonged to a network and may select an electronic device that has the lowest (worst) link quality as a leader that acknowledges the reception of data transmitted in multicast mode. According to embodiments of the present invention, the electronic device selected as a leader receives data that an electronic device has transmitted in multicast mode and acknowledges the reception of data by transmitting the acknowledgement (ACK) to the electronic device. The electronic device that has transmitted data may perform retransmission of data or determine (wait) to transmit the next data, according to a condition as to whether the ACK has been received from the electronic device selected as a leader.

In addition, according to an embodiment of the present invention, the state of link quality (e.g., high, average, low, etc. determined in accordance with a particular standard value) is determined, based on the ACK transmitted from the electronic device selected as a leader, to adjust the bit rate for data transmission rate, in real time.

The electronic device may include all information communication devices, multimedia devices, wearable devices, and their applications, which support functions according to various embodiments of the present invention, and also all types of devices that employ one or more of the following: Application Processors (APs), Graphics Processing Units (GPUs), Central Processing Units (CPUs), etc.

For example, the electronic device according to various embodiments of the present invention may be a device including a communication function. According to an embodiment, the electronic device may be implemented with: all types of devices such as a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical device, a camera, and a wearable device (e.g., a head-mounted-device (HMD) such as electronic glasses, electronic clothes, an electronic bracelet, an electronic necklace, an electronic appcessory, electronic tattoos, a smartwatch, etc.); and also various devices that can support functions according to various embodiments of the present invention.

The electronic device according to embodiments of the present invention may be a smart home appliance with a communication function. The smart home appliance may include at least one of the following: for example, a television, a digital video disk (DVD) player, an audio, a refrigerator, an air conditioner, a vacuum cleaner, an oven, a microwave oven, a washing machine, an air cleaner, a set-top box, a TV box (e.g., Samsung HomeSync™, Apple TV™, or Google TV™), a game console, an electronic dictionary, an electronic key, a camcorder, and an electronic photo frame.

The electronic device according to embodiments of the present invention may include at least one of the following: various medical devices (e.g., magnetic resonance angiography (MRA), magnetic resonance imaging (MRI), computed tomography (CT) scanner, ultrasound machine, etc.), navigation equipment, a global positioning system (GPS) receiver, an event data recorder (EDR), a flight data recorder (FDR), an automotive infotainment device, electronic equipment for ships (e.g., ship navigation equipment and a gyrocompass), avionics, security equipment, a vehicle head unit, an industrial or home robot, an automatic teller's machine (ATM) of a banking system, and a point of sales (POS) in a shop.

The electronic device according to embodiments of the present invention may include at least one of the following items with a communication function: part of furniture or building/structure, an electronic board, an electronic signature receiving device, a projector, and various types of measuring instruments (e.g., a water meter, an electric meter, a gas meter, a radio wave meter, etc.).

The electronic device according to embodiments of the present invention may be a flexible device.

The electronic device according to various embodiments of the present invention may be a combination of one or more of the aforementioned various devices. It will be apparent to those skilled in the art that the electronic device according to the present invention is not limited to the aforementioned devices.

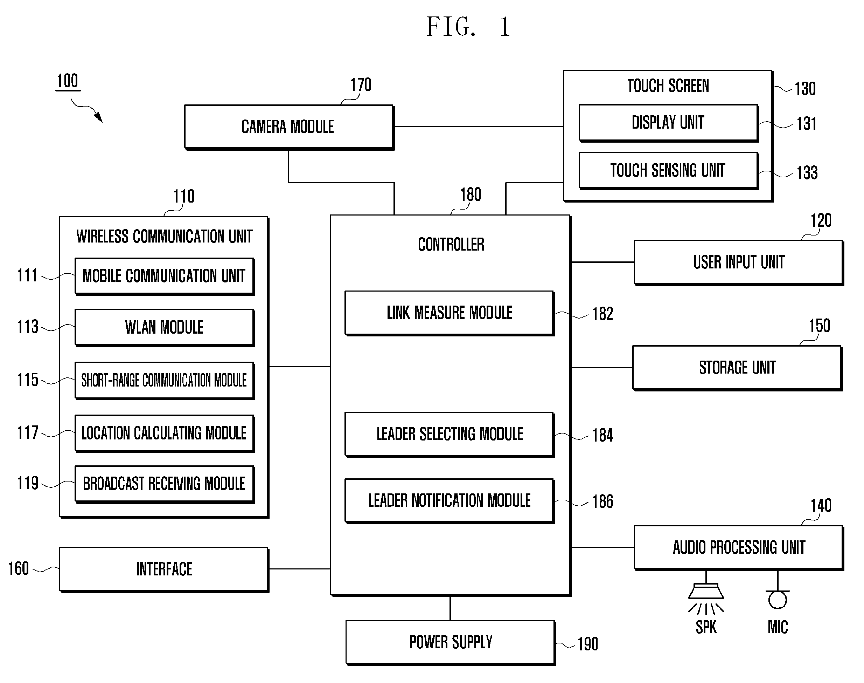

Fig. 1 is a schematic block diagram showing the configuration of an electronic device according to various embodiments of the present invention.

Referring to Fig. 1, the electronic device 100 may include a wireless communication unit 110, a user input unit 120, a touch screen 130, an audio processing unit 140, a storage unit 150, an interface 160, a camera module 170, a controller 180, and a power supply 190. It should be understood that the electronic device 100 may be modified in such a way to additionally include components not shown in Fig. 1 or remove part of the components shown in Fig. 1.

The wireless communication unit 110 may include one or more modules that perform wireless communication between the electronic device 100 and a wireless communication system or between the electronic device 100 and other electronic devices. For example, the wireless communication unit 110 may include a mobile communication unit 111, a Wireless Local Area Network (WLAN) module 113, a short-range communication module 115, a location calculating module 117, a broadcast receiving module 119, etc.

The mobile communication unit 111 may transmit/receive wireless signals, on a mobile communication network, to/from at least one of the following: a base station, an external device, and various types of servers (e.g., an integration server, a provider server, a content server, an Internet server, a cloud server, etc.). The wireless signals may include voice call signals, video call signals, or various types of data according to transmission/reception of text/multimedia messages.

The mobile communication module 111 may receive one or more data items (e.g., a log, content item, message, e-mail, image, video, weather information, location information, time information, etc.). According to an embodiment, the mobile communication module 111 may be connected to at least one of the following: a server or other electronic devices that are connected to the electronic device 100 via a network (e.g., a mobile communication network), and may obtain (receive) various data. The mobile communication module 111 may transmit various data required for the operations of the electronic device 100 according to embodiments of the present invention to the external systems (e.g., a server, other electronic devices, etc.), in response to the user request.

The WLAN module 113 may refer to a module for establishing a WLAN link with other electronic device and wireless Internet access. The WLAN module 113 may be built-in the electronic device 100 or implemented as a module separated from the electronic device 100. The WLAN module 113 may employ, as a wireless Internet technology, Wi-Fi, Wireless broadband (Wi-bro), World Interoperability for Microwave Access (Wimax), High Speed Downlink Packet Access (HSDPA), etc.

The WLAN module 113 may transmit/receive one or more data items selected by the user to/from the external system. According to an embodiment, the WLAN module 113 may obtain data from at least one of the following: a server or other electronic devices that are connected to the electronic device 100 via a network (e.g., a wireless Internet). The WLAN module 113 may transmit/receive various data of the electronic device 100 according to embodiments of the present invention to/from the external systems (e.g., a server), in response to the user request. When establishing a WLAN link with other electronic device, the WLAN module 113 may transmit/receive various data corresponding to the user's selection to/from the other electronic device. The WLAN module 113 may maintain a normal turn-on state or may be turned on according to the setting of the electronic device 100 or a user's input.

The short-range communication module 115 may refer to a module for performing short-range communication. The short-range communication module 115 may employ, as a short-range communication technology, Bluetooth, Bluetooth Low Energy (BLE), Radio Frequency Identification (RFID), Infrared Data Association (IrDA), Ultra Wideband (UWB), Zigbee, Near Field Communication (NFC), etc.

The short-range communication module 115 may receive one or more data items. According to an embodiment, the short-range communication module 115 may obtain data from other electronic device connected to the electronic device 100 via a network (e.g., a short-range communication network). When establishing short-range communication with other electronic device, the short-range communication module 115 may transmit/receive data corresponding to the user's selection to/from the other electronic device. The short-range communication module 115 may maintain a normal turn-on state or may be turned on according to the setting of the electronic device 100 or a user's input.

The location calculating module 117 refers to a module for obtaining the location of the electronic device 100. A typical example of the location calculating module 117 may be a Global Positioning System (GPS) module. The location calculating module 117 calculates the distances from three or more base stations, and the time information, and applies the calculated information to the triangulation, thereby obtaining information about the current location in 3-dimensions according to the latitude, longitude and altitude. The location calculating module 117 may receive the location information of the electronic device 100 from three or more satellites in real-time, thereby obtaining the location of the electronic device 100. It should be understood that the location information about the electronic device 100 may be obtained via various methods.

The broadcast receiving module 119 may receive broadcasting signals (e.g., TV broadcasting signals, radio broadcasting signals, data broadcasting signals, etc.) and/or broadcast-related information (e.g., broadcasting channel, broadcasts and information about broadcasting service providers, etc.) from an external broadcast management server via a broadcasting channel (e.g., satellite broadcasting channel, terrestrial broadcasting channel, etc.).

The user input unit 120 may create input data for controlling the operations of the electronic device 100 in response to user inputs. The user input unit 120 may include a keypad, a dome switch, a touch pad (resistive/capacitive type), a jog & shuttle, a sensor, etc., to detect a user's various inputs. In the various embodiments of the present invention, the sensor may include a voice recognition sensor, an infrared sensor, an acceleration sensor, a gyro sensor, a terrestrial magnetism sensor, an illuminance sensor, a color sensor, an image sensor, a temperature sensor, a proximity sensor, a motion recognition sensor, a pressure sensor, etc.

The user input unit 120 may be implemented a button, part of which is exposed to the outside of the electronic device 100. The user input unit 120 may also be implemented in such a way that part or all of the area is a touch panel. The user input unit 120 may receive a user input for initiating the operation of the electronic device 100 according to various embodiments of the present invention and may create input signals according to a user's inputs. For example, the user input unit 120 may receive a user's various inputs for executing a particular application, inputting (making or inserting) data, changing in position of the electronic device 100, displaying content, security-connecting of a group network, transmitting/receiving data, etc., and may also create input signals according to a user's inputs.

The touch screen 130 may refer to an input/output device that can simultaneously perform an input function and a displaying function. The touch screen 130 may include a display unit 131 and a touch sensing unit 133. In the embodiment, the touch screen 130 may display various screens related to the operations of the electronic device 100 on the display unit 131. Examples of the various screens are a messenger screen, a call screen, a game screen, a video playback screen, a gallery screen, a web page screen, a home screen, a group network connecting screen, etc. While displaying a specific screen via the display unit 131, the touch screen 130 detects, via the touch sensing unit 133, at least one event, e.g., a touch event, hovering event, or air gesture event, which is based on a user's touch, hovering and air gesture, and transfers the input signals corresponding to the events to the controller 180. The control unit 180 identifies the events and performs the functions corresponding to the identified events.

The display unit 131 may display (output) various information items processed in the electronic device 100. For example, when the electronic device 100 is in a call mode, the display unit 131 may display a user interface (UI) or a graphic user interface (GUI) related to the call. When the electronic device 100 is in a call mode or a photographing mode, the display unit 131 may display a taken video and/or a received video and a UI and a GUI related to operations of the corresponding mode. The display unit 131 may also display content or data related to the use of the electronic device 100 or a group of other electronic devices connected to the group network. The display unit 131 may also display application execution screens when a variety of applications are running.

The display unit 131 may support to display the screen in a landscape or portrait mode according to the orientation (or placed direction) of the electronic device 100 or to display the screen according to the change between the landscape and portrait modes. The display unit 131 may include at least one of the following: a Liquid Crystal Display (LCD), a Thin Film Transistor-liquid crystal display (TFT LCD), Light Emitting Diodes (LEDs), Organic Light Emitting Diodes (OLEDs), Active Matrix Organic Light Emitting Diodes (AMOLEDs), a flexible display, a bended display and a three- dimensional (3D) display, part of which may be a transparent display that is transparent or light-transparent.

The touch sensing unit 133 may be mounted on the display unit 131 to detect a user's inputs contacting or approaching the surface of the touch screen 130. The user's inputs may include touch events or proximity events created based on at least one of the following: a single-touch, a multi-touch, a hovering gesture and a gesture in the air (air gesture). For example, the user's inputs may be input in mode of tapping, dragging, sweeping, flicking, dragging and dropping, making a drawing gesture (e.g., writing gesture), etc. The touch sensing unit 133 senses a user's input (e.g., a touch event or a proximity event) on the surface of the touch screen 130, creates the signal corresponding to the sensed user's input, and transfers the signal to the controller 180. The controller 180 may control the execution of a function corresponding to the area where the user's input (e.g., a touch event or a proximity event) has occurred, based on the signal transferred from the touch sensing unit 133.

In embodiments of the present invention, the touch sensing unit 133 may receive a user's inputs for initiating the operations related to the use of the electronic device 100 and may create the input signals according to the user's inputs.

The touch sensing unit 133 may be configured to convert the change in pressure that is applied to or in capacitance that occurred on a particular part on the display unit 131 into an electric input signal. The touch sensing unit 133 may detect a location or an area on the surface of the display unit 131 to which an input tool (e.g., the user's finger, stylus, etc.) makes a touch or proximity. The touch sensing unit 133 may also be implemented to detect a level of touch pressure according to types of touches. When the touch sensing unit 133 detects a touch or proximity, the corresponding signal (signals) may be transferred to a touch controller (not shown). The touch controller processes the received signal(s) and then transfers the corresponding data to the controller 180. Therefore, the controller 180 can identify the area on the touch screen 130 where the touch or proximity has been made and execute the corresponding function, etc.

The audio processing unit 140 may transfer audio signals received from the controller 180 to the speaker SPK 141. The audio processing unit 140 may also transfer audio signals, such as a voice signal, etc., received via a microphone MIC 143 to the controller 180. The audio processing unit 140 may convert voice/audio data into audible sound signals and output them via the speaker SPK 141, according to the control of the controller 180. The audio processing unit 140 may convert audio signals, such as voice signals, etc., received via the microphone MIC 143 into digital signals and then transfer them to the controller 180. The audio processing unit 140 may output audio signals reacting to the user's inputs according to the audio processing information (e.g., sound effects, music files, etc.) inserted into the data.

The speaker 141 may output audio data received from the wireless communication unit 110 or stored in the storage unit 150. The speaker 141 may also output audio signals related to various types of operations (functions) running on the electronic device 100.

The microphone 143 may receive audio signals from the outside and process them to the electrical, voice data. When the electronic device 100 is in call mode, the voice data processed by the microphone 143 may be converted into a form of data to be transmitted via the mobile communication unit 110 and then output. The microphone 143 may be implemented with a noise reduction algorithm for removing noise created in the process of receiving audio signals from the outside.

The storage unit 150 may store one or more programs executed by the controller 180, and also function as a temporary storage for temporarily storing data to be input/output. The input/output data may include, for example, log, content, messenger data (e.g., conversation data), contacts (e.g., land-line or wireless phone numbers, etc.), messages, media files (e.g., files of audio, video, image, etc.), and so forth.

The storage unit 150 may store various programs and data related to the data communication between electronic devices in the network of the electronic device 100. For example, the storage unit 150 according to the embodiment of the present invention may store: one or more programs for transmitting data in multicast mode and processing functions related to the data transmission; and also the data processed by the programs.

In various embodiments of the invention, the one or more programs may include a program that performs the processes of: selecting, as a leader, one from other electronic devices on the network; transmitting data to the other electronic devices on the network; determining a condition as to whether an acknowledgement (ACK) corresponding to the transmission of data is received from the electronic device selected as a leader; and performing re-transmission of the data or waiting for transmission of the next data, according to the condition as to whether an acknowledgement (ACK) is received.

In various embodiments of the invention, the one or more programs may include a program that performs the processes of: re-selecting a leader, based on the variation in link quality corresponding to the electronic devices on the network or the wait time until the next data transmission; and notifying the previous leader and the new leader of information related to the leader re-selection (e.g., the termination of leadership and the selection of leader).

The storage unit 150 may also store the frequency in use according to operations of the electronic device 100 (e.g., the frequency in use of application, the frequency in use of content, etc.), the importance, and the precedence. The storage unit 150 may also store data related to various patterns of vibration and audio effects to be output in response to a touch input or proximity input applied to the touch screen 130. The storage unit 150 may continuously or temporarily store the operating system (OS) of the electronic device 100, programs related to the control of the input or display using the touch screen 130, programs related to the control of various operations (functions) of the electronic device 100, various types of data created as the programs operate, and so forth.

The storage unit 150 may include at least one of the following storage media: flash memory type, hard disk type of memory, micro type of memory, card type of memory (e.g., Secure Digital (SD) card or eXtream Digital (XD) card, etc.), Dynamic Random Access Memory (DRAM), Static RAM (SRAM), Read-Only Memory (ROM), Programmable ROM (PROM), Electrically Erasable PROM (EEPROM), Magnetic RAM (MRAM), magnetic disk, and optical disk. The electronic device 100 may operate, employing a web storage functioning as the storage unit 150 on the Internet.

The interface 160 may serve to interface with external devices, so that the electronic device 100 can connect to the external devices. The interface 160 may receive data and electric power from external devices to transfer and supply the data and electric power to the components in the electronic device 100. The interface 160 may also perform operations to transmit data from the electronic device 100 to the external devices. The interface 160 may include ports for a wired/wireless headset, an external charging port, a port for wired/wireless data, a memory card port, a port for connecting to a device with an identification module, audio input/output ports, video input/output ports, an earphone port, etc.

The camera module 170 refers to a configuration for supporting an image taking function of the electronic device 100. The camera module 170 may take images (still images or moving images) of a subject. The camera module 170 may take images of a subject under the control of the controller 180, and may transfer the image data to the display 131 and the controller 180. The camera module 170 may include an image sensor (or a camera sensor, not shown) for converting the input optical signals into electrical signals, and an image signal processor (not shown) for converting the electrical signals from the image sensor into digital image data. The image sensor may be implemented with a Charge Coupled Device (CCD) image sensor, a Complementary Metal Oxide Semiconductor (CMOS) image sensor, etc. The camera module 170 may support image processing functions for taking images in various image-shooting options (e.g., zooming, aspect ratios, effects such as sketch, mono, sepia, vintage, mosaic, picture frame, etc.) according to a user's settings.

The controller 180 may control the whole operation of the electronic device 100. For example, the controller 180 may control operations related to voice communication, data communication, video communication, etc. In embodiments of the present invention, the controller 180 may control operations related to data communication between the electronic device 100 and one or more of other electronic devices.

For example, the controller 180 may control the following operations related to: the initiation of data transmission in Reliable MultiCast (RMC) according to the present invention; the measurement of link quality of other electronic devices connected in Wi-Fi on the network; the selection of an electronic device to be operated as a leader based on the measured link quality; and the notification to an electronic device that the electronic device has been selected as a leader.

The controller 180 may control the following operations related to: the transmission of data; and the re-transmission of the data or the determination of the transmission of the next data, according to a condition as to whether an acknowledgement (ACK) has been received from the electronic device selected as a leader.

The controller 180 may control, in real-time, the operations related to the adjustment of bit rate, based on the quality state of the acknowledgement (ACK) received from the electronic device selected as a leader.

The controller 180 may control the following operations related to: the re-selection of an electronic device to be operated as a leader based on a pre-defined period of time (e.g., T_{idle}) after interrupting the transmission of data; the notification to the electronic device, operated as an existing leader, that its leadership is terminated after the re-selection of the electronic device as a leader; and the notification to the electronic device, selected as a new leader, that it is selected as a new leader.

In the embodiment of the present invention, the controller 180 may be implemented with one or more processors for executing one or more programs, stored in the storage unit 150, to control the operations of the electronic device 100 according to the present invention. For example, the controller 180 may include a link measure module 182, a leader selection module 184, and a leader notification module 186.

The link measure module 182 may measure and manage, in real-time, link quality of other electronic devices connected via W-Fi on the network. In various embodiments of the present invention, the link quality may be measured by Radio Signal Strength Indicator (RSSI), Packet Error Rate (PER), Bit Error Rate (BER), Round Trip Time (RTT), Link Measure Request/Confirm (IEEE 802.11-2012, Chapter 6.3.34), or the like.

When the electronic device 100 initiates transmission of data to a plurality of other electronic devices, in multicast mode, for the first time, the leader selection module 184 determines an electronic device with the lowest link quality based on information (e.g., link quality information) managed by the link measure module 182, and may set the electronic device as a leader. Since the electronic devices connected via Wi-Fi on the network are guaranteed in mobility, their locations may be changed at any time and this causes their link qualities to vary in real-time, respectively. Therefore, the leader selection module 184 stops transmitting data in multicast mode. After a particular period of time (e.g., T_{idle}) has elapsed, the leader selection module 184 may perform the leader re-selection.

The leader notification module 186 may notify the electronic device selected as a leader by the leader selection module 184 that the electronic device is selected as a leader, via a particular frame (e.g., action frame). When an electronic device that has been selected as a leader is terminated in leadership, the leader notification module 186 may notify the electronic device that its leadership has been terminated. When a leader is re-selected by the leader selection module 184, the leader notification module 186 may notify the electronic device that has been a previous leader and the electronic device selected as a new leader of the leader re-selection via the particular frame, respectively.

In the embodiment of the present invention, in order to notify leader selection or leadership termination, the reader notification module 186 may transmit the action frame including information related to the leader selection or the leadership termination to the corresponding electronic device, directly, in unicast mode or to all the other electronic devices on the network in multicast mode. According to various embodiments of the present invention, when the reader notification module 186 transmits the action frame in multicast mode, the other electronic devices receive the action frame, and may directly determine whether they are selected as a leader or terminated in leadership, based on the information defined in the action frame (e.g., MAC address, Action Subtype field value).

The controller 180 according to various embodiments of the present invention may also control various operations related to the general functions of the electronic device 100 in addition to the functions described above. For example, when a particular application is executed, the controller 180 may control the display of screens and the operations. In addition, when touch or proximity events occur in a touch or proximity based-input interface (e.g., a touch screen 130), the controller 180 receives the input signals corresponding to the touch or proximity events and may control the corresponding functions. The controller 180 may also control transmission/reception of data, based on wire/wireless communication.

The power supply 190 may receive electric power from the external or internal source and supply it to the components in the electronic device 100, under the control of the controller 180. In the embodiment, the power supply 190 may supply or cut off electric power to the display unit 131 under the control of the controller 180.

The term 'module' used in the present disclosure may mean a unit including one of hardware, software, and firmware or a combination thereof. The 'module' may be interchangeable with the term 'unit,' 'logic,' 'logical block,' 'component,' or 'circuit.' The 'module' may be the smallest unit of an integrated component or a part thereof. The 'module' may be the smallest unit that performs one or more functions or a part thereof. The 'module' may be mechanically or electronically implemented. For example, the 'module' according to the present disclosure may include at least one of an application-specific integrated circuit (ASIC) chip, a field-programmable gate arrays (FPGAs), and a programmable-logic device for performing certain operations, which are now known or will be developed in the future.

Various embodiments of the present invention may be implemented in recording media that computers or the equivalent devices can read by using hardware and software or a combination thereof. Embodiments of the present invention may be implemented in hardware, by using at least one of the following: Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro-processors, electrical units for executing functions, etc.

In various embodiments of the present invention, the computer-readable recording medium storing software for executing the following: selecting, as a leader, one from other electronic devices in a network; transmitting data to the other electronic devices on the network; determining a condition as to whether an acknowledgement (ACK) corresponding to the transmission of data is received from the electronic device selected as a leader; and performing re-transmission of the data or waiting for transmission of the next data, according to the condition as to whether an acknowledgement (ACK) has been received.

Additionally, in various embodiments of the present invention, the computer-readable recording medium storing software for executing the following: re-selecting a leader, based on the variation in link quality corresponding to electronic devices on the network or the wait time until the next data transmission; and notifying the previous leader and the new leader of information related to the leader re-selection (e.g., the termination of leadership and the selection of leader) via a pre-defined action frame.

Some of the embodiments of the present disclosure may be implemented in the controller 180 itself. In addition, the procedures and functions according to embodiments of the present invention may also be implemented by separate software modules. Each of the software modules may perform one or more functions or operations descried in the present disclosure.

The electronic device according to embodiments of the present invention may include all of the AP station and the non-AP station, as function media including physical layer interface for wireless media and Medium Access Control (MAC) complying with Institute of Electrical and Electronics Engineers (IEEE) 802.11 standards.

The reliable multicast functionality according to various embodiments of the present invention may be supported in infrastructure mode (including SoftAP) and IBSS mode. Various embodiments of the present invention may support the following: sending multicast traffic (data) from the SoftAP in the infrastructure mode; sending multicast traffic (data) from the STA via the SoftAP in the infrastructure mode; and sending multicast traffic (data) from the STA in the IBSS mode. In various embodiments of the present invention, various scenarios may also be used.

In the network according to various embodiments of the present invention, the respective stations (nodes) are classified into four types of functioning components, an initiator (Initiator), sender (Transmitter), receiver (Receiver), and leader (Leader) and operate as their classified functions.

In the embodiment, the initiator (Initiator) may refer to an electronic device (node) that triggers data (packets or traffic), e.g., multicast data, by applications. In addition, the initiator may notify the sender of the activation of reliable multicast functionality. In an embodiment, when the activation of reliable multicast functionality is required to be notified (e.g., the initiator is an electronic device (SAT) in infrastructure mode), the notification may be made. When the notification is not needed, the embodiment may be implemented without performing the notifying operation.

In the embodiment, the sender (Transmitter) may refer to an electronic device that transmits data (e.g., multicast data) to other electronic devices (nodes or STA). The sender may also perform other algorithms for providing reliable multicast (RMC) according to various embodiments of the present invention. In embodiments of the invention, the sender may select a leader based on accumulated link parameters and may transmit, to the leader, an action frame pre-defined before transmitting data (packets), e.g., multicast data, thereby notifying the leader of the leader selection. In the embodiment, the sender may transmit the action frame to a corresponding receiver in unicast mode, so that it can directly notify the receiver of the leader selection or the leadership termination. The sender may also preform transmission of the action frame in multicast mode, so that a corresponding receiver can directly determine whether it has been selected as a leader or terminated in leadership and then perform a corresponding operation.

In the embodiment, the receiver may refer to an electronic device that receives data (e.g., multicast data) transmitted from the sender. The network according to various embodiments of the present invention may include one or more receivers.

In the embodiment, the leader may refer to an electronic device that can receive data (e.g., multicast data) transmitted from the sender, and can transmit, to the sender, an acknowledgement (ACK)/acknowledgements (ACKs) in a similar mode as it performs the transmission in normal unicast mode, thereby performing multicast mode according to various embodiments of the present invention. In various embodiments of the present invention, the leader may be selected from among the receivers.

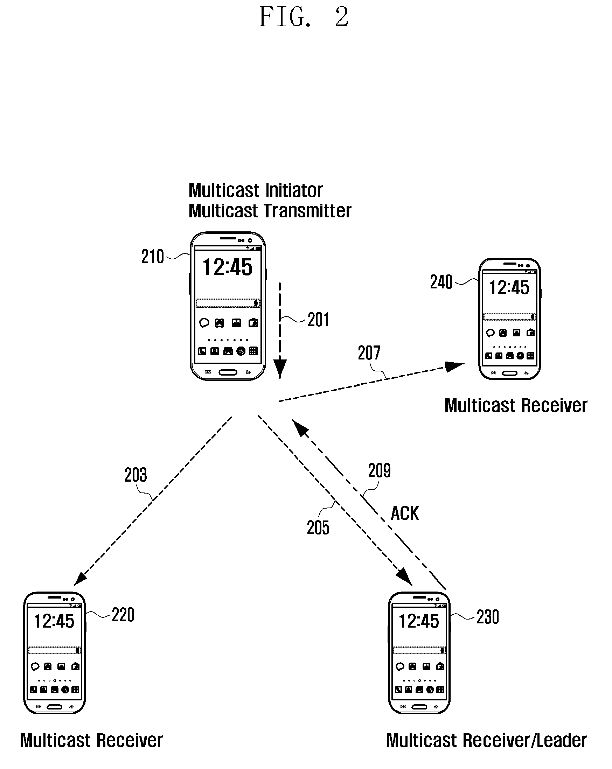

Fig. 2 is a diagram showing an example of a network environment including electronic devices according to an embodiment of the present invention.

Fig. 2 shows a network without an Access Point (AP) that centrally manages network (e.g., ad-hoc network, Independent Basic Service Set (IBSS) network), i.e., a network that performs direct communication between electronic devices 210, 220, 230, and 240 without using an AP. Referring to Fig. 2, an example of direct communication on the network is explained. For example, as shown in Fig. 2, the network includes first, second, third and fourth electronic devices 210, 220, 230, and 240.

The first electronic device 210 may function as an initiator (e.g., multicast initiator) for providing data to be transmitted to the other electronic devices 220, 230, and 240 and simultaneously as a sender (e.g., multicast transmitter) for transmitting the data to the other electronic devices 220, 230, and 240 on the network in multicast mode.

The second, third and fourth electronic devices 220, 230, and 240 may function as receivers (e.g., multicast receivers) for receiving data transmitted from the first electronic device 210. For example, the third electronic device 230 may function as the multicast receiver, and simultaneously as a leader.

As shown in Fig. 2, when initiating data transmission based on reliable multicast (RMC) according to the present invention, the first electronic device 210 may measure link qualities for the other electronic devices 220, 230, and 240 on the network and may select one of the electronic devices as a leader (e.g., third electronic device 230) based on the measured link qualities. In an embodiment, the first electronic device 210 may compare the link qualities for the second, third and fourth electronic devices 220, 230, and 240 with each other, and may select the electronic device with the lowest (worst) link quality as a leader (e.g., the third electronic device 230).

According to various embodiments of the invention, the sender may select, as a leader, one of the receivers which has the lowest/worst link quality in a network. That is, the receiver having the lowest/worst link quality may be a leader of the network to improve the reliability. In the embodiment of the present invention, the link quality may be determined, based on various parameters and/or conditions (e.g., access speed to a network, battery status, processor speed, memory capacity, relay ability to other electronic devices (nodes), history or log (e.g., a history that has transmitted amount of data, etc.) of a setting, etc.). According to an embodiment, the link quality may be measured, based on RSSI, PER, BER, RTT, or Link Measure Request/Confirm (IEEE 802.11-2012, Chapter 6.3.34), etc., and an electronic device having the lowest link quality from the link quality measurement may be selected as a leader. According to various embodiments of the present invention, the reader may be re-selected based on the variation in link quality on the network.

After performing a leader selection, the first electronic device 210 may transmit data in multicast mode in operation 201. The data may be transmitted to the second, third and fourth electronic devices 220, 230, and 240 in operations 203, 205, and 207, respectively. In the embodiment, when receiving the data from the first electronic device 210, the third electronic device 230 selected as a leader by the first electronic device 210 may transmit the acknowledgement (ACK) in response to the reception of data to the first electronic device 210 in operation 209.

When receiving the acknowledgement (ACK) from the third electronic device 230 selected as a leader, the first electronic device 210 may determine to perform transmission of the next data. When the first electronic device 210 does not receive the acknowledgement (ACK) from the third electronic device 230 selected as a leader, it may determine to perform the re-transmission of the data. That is, after performing transmission of data, the first electronic device 210 may perform re-transmission of the data or transmission of the next data, based on a condition as to whether it receives the acknowledgement (ACK) in response to the data transmission, from the third electronic device 230 selected as a leader. In addition, the first electronic device 210 may estimate the state of link quality (e.g., high, average, low, etc. determined in accordance with a particular standard value), based on the ACK transmitted from the third electronic device 230 selected as a leader, and may also adjust the bit rate according to the estimated state of link quality, in real time.

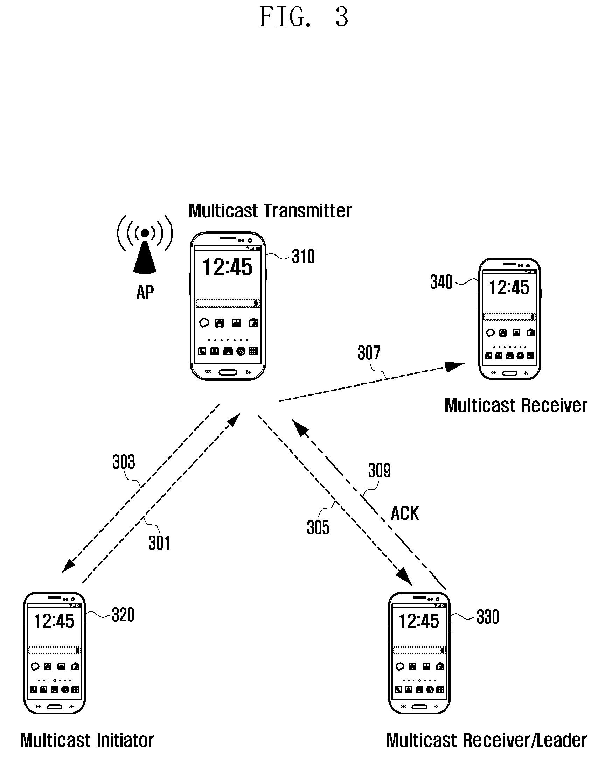

Fig. 3 is a diagram showing another example of a network environment including electronic devices according to an embodiment of the present invention.

Fig. 3 shows a network where an AP exists or a particular electronic device serves as an AP station, e.g., an infrastructure network. Referring to Fig. 3, an example of data communication on the network is explained when an electronic device serving as a non-AP station initiates transmission of data. As shown in Fig. 3, the network includes first, second, third and fourth electronic devices 310, 320, 330, and 340, and the first electronic device 310 serves as an AP station to provide an AP function on the network.

The first electronic device 310 provides an AP function. The first electronic device 310 may function as a sender (e.g., multicast transmitter) that transmits data, created and transmitted from a particular electronic device (e.g., the second electronic device 320), to the other electronic devices 330 and 340 on the network in multicast mode.

The second electronic device 320 may function as an initiator (e.g., multicast initiator) for providing data to be transmitted to the other electronic devices 330 and 340 via an AP (e.g., the first electronic device 310 of an AP station).

The third and fourth electronic devices 330 and 340 may function as receivers (e.g., multicast receivers) for receiving data transmitted from the first electronic device 310 via the AP (e.g., the first electronic device 310 of an AP station). For example, while the third electronic device 330 is functioning as the multicast receiver, it may and be simultaneously selected as a leader.

As shown in Fig. 3, when initiating data transmission based on reliable multicast (RMC) according to the present invention, the second electronic device 320 may transmit data to the AP (e.g., the first electronic device 310 of an AP station) managing the network in operation 301. Data transmission to the AP from the first electronic device 310 may be performed in unicast mode. When performing data transmission, the first electronic device 310 may transmit an action frame requesting data transmission, e.g., an RMC Enabling Request. The action frame will be described in detail later.

When receiving the data from the second electronic device 320, the AP (e.g., the first electronic device 310 of an AP station) may transmit the acknowledgement (ACK) in response to the reception of data to the second electronic device 320 in operation 303. The AP (e.g., the first electronic device 310 of an AP station) may measure link qualities for the other electronic devices 330 and 340 on the network and may select one of the electronic devices as a leader (e.g., third electronic device 330) based on the measured link qualities.

After selecting a leader, the AP (e.g., the first electronic device 310 of an AP station) may perform transmission of data in multicast mode in operations 305 and 307. The data may be transmitted to the third and fourth electronic devices 330 and 340. When the third electronic device 330, selected as a leader by the AP (e.g., the first electronic device 310 of an AP station), receives the data, it may transmit the acknowledgement (ACK) in response to the reception of data to the AP (e.g., the first electronic device 310 of an AP station) in operation 309.

After performing transmission of data, the AP (e.g., the first electronic device 310 of an AP station) may perform re-transmission of the data or transmission of the next data, based on a condition as to whether it receives the acknowledgement (ACK) in response to the data transmission from the third electronic device 330 selected as a leader. In addition, the AP (e.g., the first electronic device 310 of an AP station) may estimate the state of link quality (e.g., high, average, low, etc. determined in accordance with a particular standard value), based on the ACK transmitted from the third electronic device 330 selected as a leader, and may also adjust the bit rate according to the estimated state of link quality, in real time.

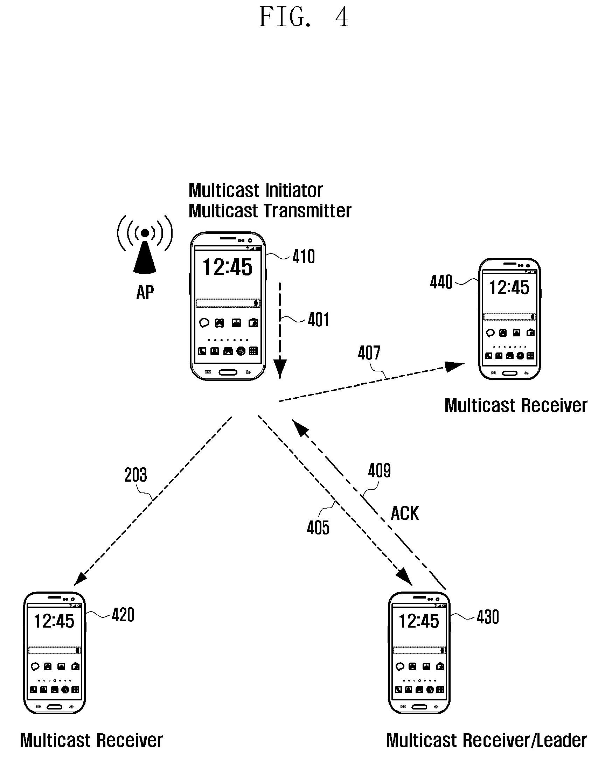

Fig. 4 is a diagram showing still another example of a network environment including electronic devices according to an embodiment of the present invention.

Fig. 4 shows an example of data communication in the same network environment as shown in Fig. 3 when an electronic device serving as an AP station initiates transmission of data. As shown in Fig. 4, the network includes first, second, third and fourth electronic devices 410, 420, 430, and 440, and the first electronic device 410 serves as an AP station to provide an AP function on the network. In the embodiment of Fig. 4, it is assumed that the initiator and the sender are identical to each other.

The first electronic device 410 provides an AP function. The first electronic device 410 may function as an initiator (e.g., multicast initiator) for providing data to the other electronic devices 420, 430 and 440, and simultaneously as a sender (e.g., multicast transmitter) that transmits the data to the other electronic devices 420, 430 and 440 on the network in multicast mode.

The second, third and fourth electronic devices 420, 430, and 440 may serve as receivers (e.g., multicast receivers) for receiving data transmitted from the first electronic device 410. While the third electronic device 430 is functioning as the multicast receiver, it may and be simultaneously selected as a leader.

As shown in Fig. 4, when initiating data transmission based on reliable multicast (RMC) according to the present invention, the AP (e.g., the first electronic device 410 of an AP station) may measure link qualities for the other electronic devices 420, 430 and 440 on the network, and may select one of the electronic devices as a leader (e.g., third electronic device 430) based on the measured link qualities.

After selecting a leader, the AP (e.g., the first electronic device 410 of an AP station) may perform transmission of data in multicast mode in operation 401. The data may be transmitted to the second, third and fourth electronic devices 420, 430 and 440 in operations 403, 405 and 407. When the third electronic device 430, selected as a leader by the AP (e.g., the first electronic device 410 of an AP station), receives the data, it may transmit the acknowledgement (ACK) in response to the reception of data to the AP (e.g., the first electronic device 410 of an AP station) in operation 409.

After performing transmission of data, the AP (e.g., the first electronic device 410 of an AP station) may perform re-transmission of the data or transmission of the next data, based on a condition as to whether it receives the acknowledgement (ACK) in response to the data transmission from the third electronic device 430 selected as a leader. In addition, the AP (e.g., the first electronic device 410 of an AP station) may estimate the state of link quality (e.g., high, average, low, etc. determined in accordance with a particular standard value), based on the ACK transmitted from the third electronic device 430 selected as a leader, and may also adjust the bit rate according to the estimated state of link quality, in real time.

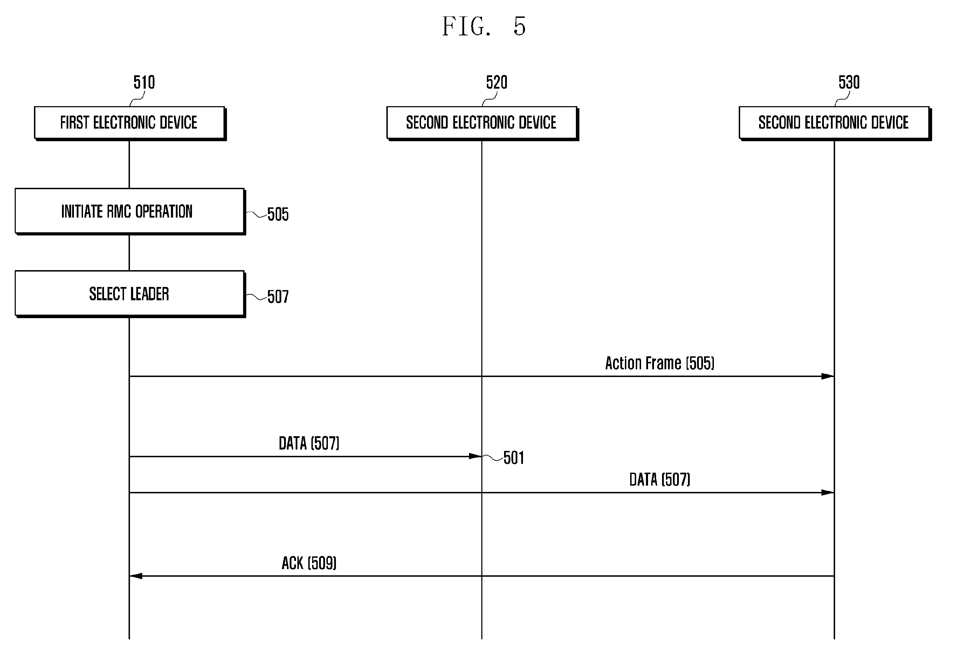

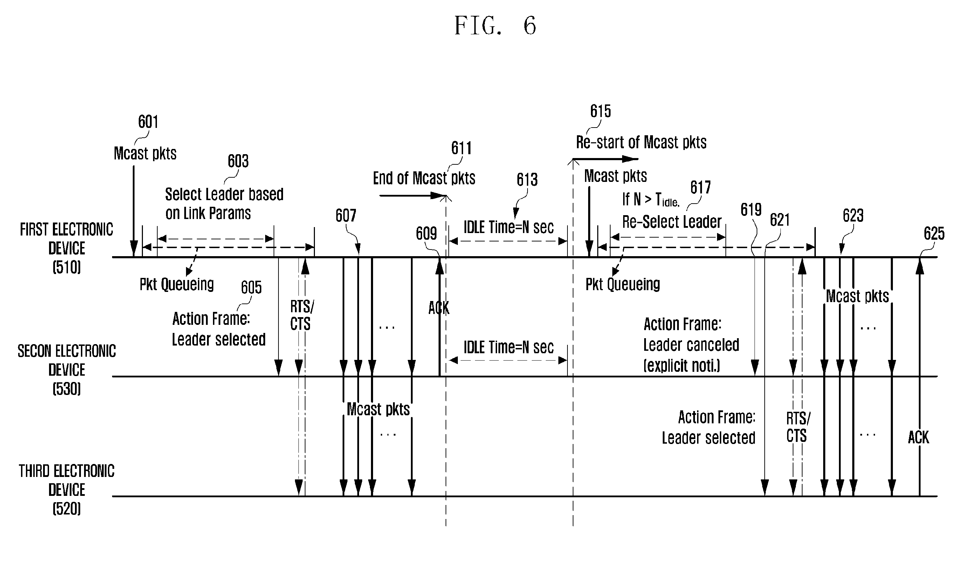

Figs. 5 and 6 are diagrams showing data communication operations in a network according to an embodiment of the present invention.

Referring to Figs. 5 and 6, the first electronic device 510 may include an electronic device operating in IBSS mode or an electronic device of an AP station that serves as an initiator for providing data to be transmitted to other electronic devices 520 and 530 on the network and a sender for transmitting the data in multicast mode. Figs. 5 and 6 show an example of data communication when the second and third electronic device 520 and 530 serve as receivers and the third electronic device 530 is selected as a leader.

As shown in Figs. 5 and 6, the first electronic device 510 may initiate an RMC operation in response to a user's data transmission request in operation 501 (operation 601), and may select a leader from the other electronic devices 520 and 530 on the network in operation 503 (operation 603). The first electronic device 510 may measure link quality of the neighboring electronic devices 520 and 530 connected to each other on the network, in response to the initiation of the RMC operation, and may select an electronic device to be operated as a leader (e.g., the third electronic device 530) based on the measured link quality. According to an embodiment, the first electronic device 510 may compare the link quality of the second electronic device 520 with that of the third electronic device 530, and may select, as a leader, the electronic device having the lowest (worst) link quality (e.g., the third electronic device 530).

The first electronic device 510 may notify the third electronic device 530 that the third electronic device 530 has been selected as a leader in operation 505 (operation 605). According to an embodiment, the first electronic device 510 may transmit an action frame including information relating to the leader selection to the third electronic device 530.

According to various embodiments of the present invention, when a sender (e.g., the first electronic device 510) selects a leader, it performs transmission of the action frame that has been pre-defined, thereby notifying the selected leader (e.g., third electronic device 530) of the leader selection. The sender may compile one or more link parameters. One or more link parameters may be used in the process of selecting the leader. For example, on one or more link parameters may be used to select the electronic device having the lowest link quality (e.g., the lowest link speed) as a leader.

In various embodiments of the present invention, as shown in Figs. 5 and 6, the action frame may be transmitted in unicast mode or also be multicast/broadcast to all the electronic devices 520 and 530 on the network in multicast mode.

The first electronic device 510 may transmit the data to the other electronic devices 520 and 530 on the network in operation 507 (operation 607). The data transmission may be performed in multicast or broadcast mode.

When receiving the data from the first electronic device 510, the third electronic device 530 selected as a leader may transmit the acknowledgement (ACK) in response to the reception of data to the first electronic device 510 in operation 509 (operation 609).

Additionally or alternatively, the third electronic device 530 may transmit the acknowledgements (ACKs) to the first electronic device 510 each time that it receives data from the first electronic device 510 until it receives the notification of leadership termination from the first electronic device 510. When the third electronic device 530 receives the notification of leadership termination, it may not perform transmission of the acknowledgement (ACK) in response to the data reception.

In addition, when the first electronic device 510 does not receive the acknowledgement (ACK) in response to the data transmission from the third electronic device 530 selected as a leader, it may perform re-transmission of the data. In addition, the first electronic device 510 may estimate the state of link quality based on the ACK received from the third electronic device 530 selected as a leader, and may also adjust the bit rate to determine the data transmission speed, according to the estimated state of link quality, in real time.

Meanwhile, the electronic devices 510, 520 and 530 connected to each other on the network may be guaranteed in mobility and their locations may be changed at any time. This may cause the link qualities between the electronic devices 510, 520 and 530 on the network to vary, in real-time, respectively. In this case, the embodiment of the present invention may: stop data transmission; perform, after a pre-defined idle time T_{idle} has elapsed, the leader re-selection; and notify the electronic device that has been a leader and an electronic device newly selected as a leader of the information about the operations.

According to an embodiment, when data transmission is stopped as in operation 611, the first electronic device 510 may check an idle time from the time point that the data transmission is stopped to a time point that the next data transmission is initiated. For example, in a state where data transmission has not been performed for a period of time (e.g., N seconds where N is the positive integers) since data was transmitted as in operation 613, when data transmission restarts as in operation 615, the first electronic device 510 may determine whether the period of time exceeds a pre-defined idle time T_{idle} as in operation 617.

When the period of time N exceeds a pre-defined idle time T_{idle}, i.e., N> T_{idle}, in operation 617, the first electronic device 510 may notify the third electronic device 530 that has been selected as a leader of the leadership termination in operation 619. The first electronic device 510 may notify the second electronic device 520 that it is selected as a new leader in operation 621. According to an embodiment, the leader selection and the leadership termination is notified to the corresponding electronic devices via the action frames including the information, respectively.

After that, the first electronic device 510 may perform transmission of data in multicast mode as in operation 623, and reception of the ACK from the second electronic device 520 selected as a leader as in operation 625.

According to various embodiments of the present invention, the leader may be re-selected when various conditions are satisfied. For example, when a wait time (idle time) exceeds a pre-defined idle time (e.g., N seconds) after the last multicast data is transmitted, the leader may be re-selected. In the embodiment, the 'N' may be set to various values. In an embodiment, the N may be set to 20 seconds as a default value.

According various embodiments of the present invention, in order to notify the termination (cancellation) of leadership to the electronic device that has been selected as a leader, a pre-defined action frame may be transmitted to the electronic device. In addition, according to various embodiments of the present invention, when the link quality of a leader received via the acknowledgment (ACK) or link quality of the respective electronic devices received via a beacon has been altered, corresponding electronic devices may be ranked to re-select a leader.

In the embodiment shown in Fig. 6, Ready To Send (RTS, transmission request)/Clear To Send (CTS, receivable) may be used between the sender and the leader in order to reserve, for example, wireless resources. For example, the RTS may be a signal indicating that the sender has been ready to transmit data to the leader. The CTS may be an acceptance signal, as a response to the RTS, indicating that the leader is ready to receive data from the sender and allows for the transmission of data.

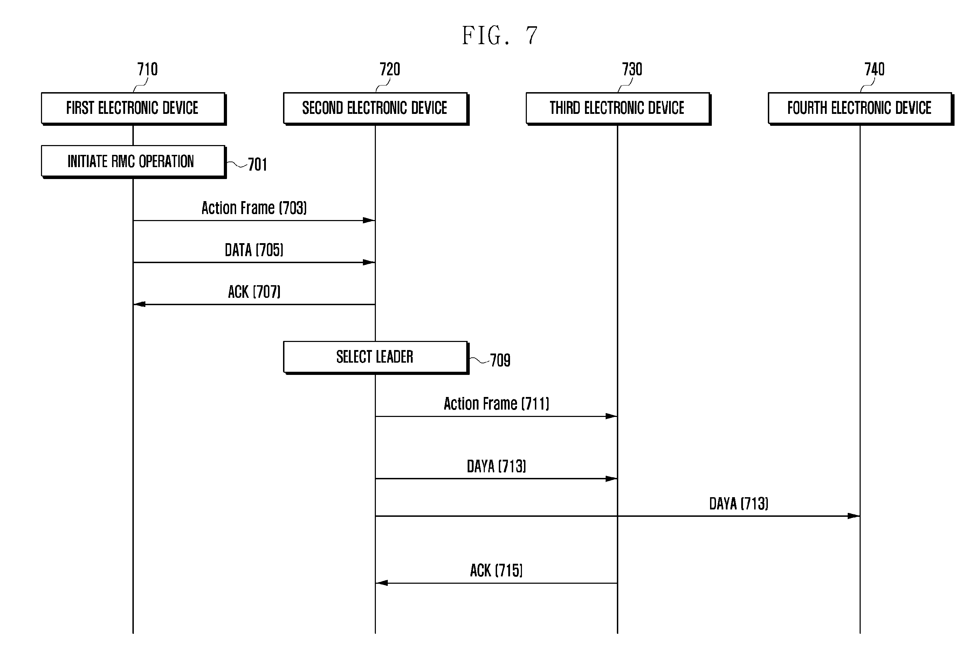

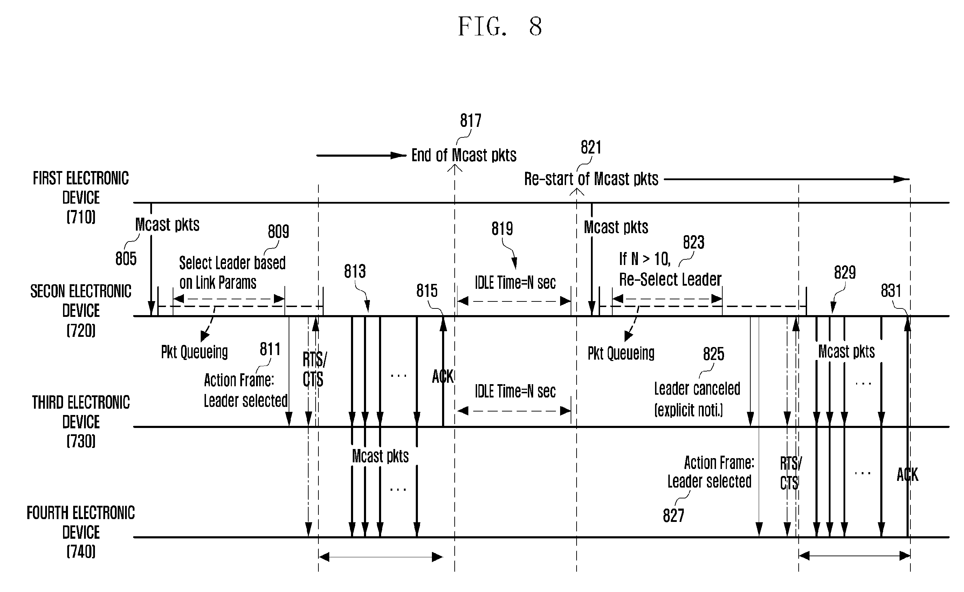

Figs. 7 and 8 are diagrams showing data communication operations in a network according to an embodiment of the present invention.

Referring to Figs. 7 and 8, an example of data communication is explained when an electronic device serving as a non-AP station initiates transmission of data in a network where an AP exists or a particular electronic device serves as an AP station.

Referring to Figs. 7 and 8, the first electronic device 710 provides data to be transmitted to the other electronic devices 730 and 740 via the second electronic device 720 (or AP) of an AP station; and the second electronic device 720 provides an AP function and serves as a sender for transmitting the data, created and transmitted by the first electronic device 710, to the other electronic devices 730 and 740 on the network in multicast mode. The embodiment shown in Figs. 7 and 8 describe an example of data communication when the third and fourth electronic devices 730 and 740 serve as receivers and the third electronic device 730 is selected as a leader.

As shown in Figs. 7 and 8, the first electronic device 710 may initiate an RMC operation in response to a user's data transmission request in operation 701. While the first electronic device 710 requests RMC based data transmission (e.g., RMC Enabling Request) from the second electronic device 720 (or AP) managing the network, in operations 703, the first electronic device 710 may transmit the data the second electronic device 720 in operation 705 (operation 805). In various embodiments of the present invention, the data transmission request according to operation 703 may be included in an action frame including the related information and transmitted along with the action frame.

According to embodiments of the present invention, the sender may check the state of reliable multicast function (e.g., activated or deactivated) before starting the exchange of in data (packets), e.g., multicast data. In an embodiment, when the initiator is an STA in the infrastructure mode, the initiator may notify the sender of the activation/deactivation of reliable multicast function. In the embodiment, the notification may be performed by transmitting, for example, one or more pre-defined action frames.

When the second electronic device 720 receives the data from the first electronic device 710, it may transmit the acknowledgement (ACK) in response to the reception of the data to the first electronic device 710 in operation 707. The second electronic device 720 may select, as a leader, one of the other electronic devices 730 and 740 on the network in operation 709 (operation 809). According to an embodiment, the second electronic device 720 may measure link quality of the neighboring electronic devices 730 and 740 connected to each other on the network, and may select an electronic device to be operated as a leader (e.g., the third electronic device 730) based on the measured link quality.

The second electronic device 720 may notify the third electronic device 730 that the third electronic device 730 has been selected as a leader in operation 711 (operation 811). According to an embodiment, the second electronic device 720 may transmit an action frame including the leader selection-related information to the third electronic device 730. As shown in Figs. 7 and 8, the action frame may be transmitted in unicast mode or also be multicast/broadcast to all the electronic devices 730 and 740 on the network in multicast mode.

The second electronic device 720 may transmit the data to the other electronic devices 730 and 740 on the network in operation 713 (operation 813). The data transmission may be performed in multicast or broadcast mode.

When receiving the data from the second electronic device 720, the third electronic device 730 selected as a leader may transmit the acknowledgement (ACK) in response to the reception of data to the second electronic device 720 in operation 715 (operation 815). Additionally or alternatively, the third electronic device 730 may transmit the acknowledgements (ACKs) to the second electronic device 720 each time that it receives data from the second electronic device 720 until it receives the notification of leadership termination from the second electronic device 720. When the third electronic device 730 receives the notification of leadership termination, it may not perform transmission of the acknowledgement (ACK) in response to the data reception.

In addition, the second electronic device 720 may determine to re-transmit the data, based on a condition as to whether the acknowledgement (ACK) in response to the data transmission has been received from the third electronic device 730 selected as a leader. The second electronic device 720 may also estimate the state of link quality based on the ACK received from the third electronic device 730 selected as a leader, and may adjust the bit rate to determine the data transmission speed, according to the estimated state of link quality, in real time.

According to an embodiment, when data transmission is stopped as in operation 817, the second electronic device 720 may check an idle time from the time point that the data transmission is stopped to a time point that the next data transmission is initiated. For example, in a state where data transmission has not been performed for a period of time (e.g., N seconds where N is the positive integers) since data was transmitted as in operation 819, when data transmission restarts as in operation 821, the second electronic device 720 may determine whether the period of time exceeds a pre-defined idle time T_{idle} as in operation 823.

When the period of time N exceeds a pre-defined idle time T_{idle}, i.e., N> T_{idle}, the second electronic device 720 may notify the third electronic device 730 that has been selected as a leader of the leadership termination in operation 825. The second electronic device 720 may notify the fourth electronic device 740 that the fourth electronic device 740 is selected as a new leader in operation 827. According to an embodiment, the leader selection and the leadership termination is notified to the corresponding electronic devices via the action frames including the information, respectively.

After that, the second electronic device 720 may perform transmission of data in multicast mode as in operation 829, and reception of the ACK from the fourth electronic device 740 selected as a leader as in operation 831.

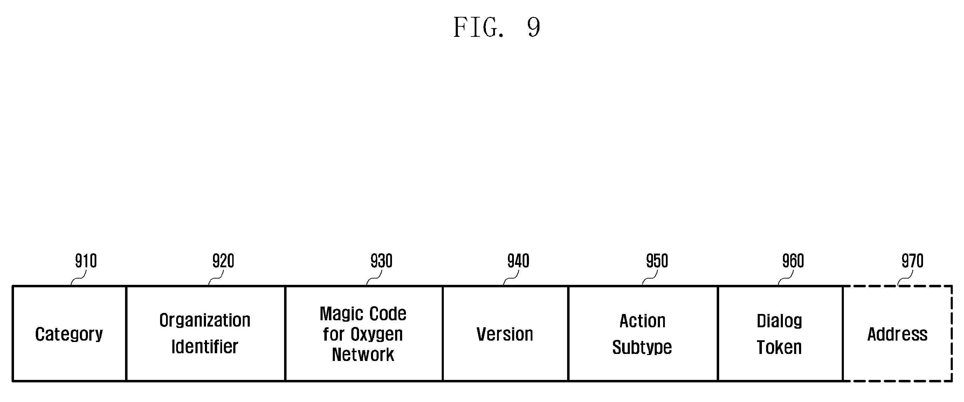

Fig. 9 is a diagram showing a format of frame used for data communication according to an embodiment of the present invention.

Referring to Fig. 9, the frames according to an embodiment of the present invention (e.g., action frames) may be used in reliable multicast (RMC) operations and may comply with Institute of Electrical and Electronics Engineers (IEEE) 802.11 standards.

The format of transmission action frame for reliable multicast (RMC) according to embodiments of the present invention may include a number of fields, such as 'Category' 910, 'Organization Identifier' 920, 'Magic Code for Oxygen Network' 930, 'Version' 940, 'Action Subtype' 950, 'Dialog Token' 960, and 'Address' 970. According to an embodiment, the 'Category' field 910 may be allocated to be 1 Octet; 'Organization Identifier' field 920 to be 3 Octets; 'Magic Code for Oxygen Network' field 930 to be 6 Octets; 'Version' field 940 to be 1 Octet; 'Action Subtype' field 950 to be 1 Octet; 'Dialog Token' field 960 to be 1 Octet; and 'Address' field 970 to be 6 Octets.

The action frames according to embodiments of the present invention may define information (value, e.g., Action Subtype field value) related to a leader notification for reliable multicast (RMC) in the 'Action Subtype' field 950 allocated so that the vendors can freely modify the field. An example of the Action Subtype field value is described as the following table 1. It should be understood that the present invention is not limited to the following table 1.

**[Table 1]**

| Action Subtype field value | Description |
|---|---|
| 0 | RMC Enavling Request (From a STA in infrastructure mode to SoftAP) |
| 1 | RMC Disabling Request (From a STA in infrastructure mode to SoftAP) |
| 2 | RMC Leader Inform - Leader Selected |
| 3 | RMC Leader Inform - Leader Canceled |

In Table 1, 'Action Subtype field value = 0' indicates a request of data transmission in RMC (e.g., RMC Enabling Request) that an electronic device of a non-AP station makes from an AP or an electronic device of an AP station; 'Action Subtype field value = 2' indicates a request of data transmission termination in RMC (e.g., RMC Disabling Request) that an electronic device of a non-AP station makes from an AP or an electronic device of an AP station; 'Action Subtype field value = 3' indicates the notification of leader selection to an electronic device selected as a leader; and 'Action Subtype field value = 4' indicates the notification of leadership termination to an electronic device that has been terminated in leadership. According to an embodiment, the RMC Enabling/Disabling Request may be used in the infrastructure mode, but may be omitted in ad-hoc or IBSS mode.

In embodiments of the present invention, when the action frame is transmitted in multicast mode, an electronic device receiving the action frame (e.g., receiver) may refer the information in 'Action Subtype' field 950, described in Table 1, and 'Address' field 970. When the 'Address' field 970 includes the address of the electronic device (receiver) (e.g., MAC address), the electronic device may identify whether it is selected as a leader or terminated in leadership, based on the information in the 'Action Subtype' 950. According to an embodiment, when the action frame is transmitted in unicast mode, 'Address' field 970 may be omitted in the action frame.

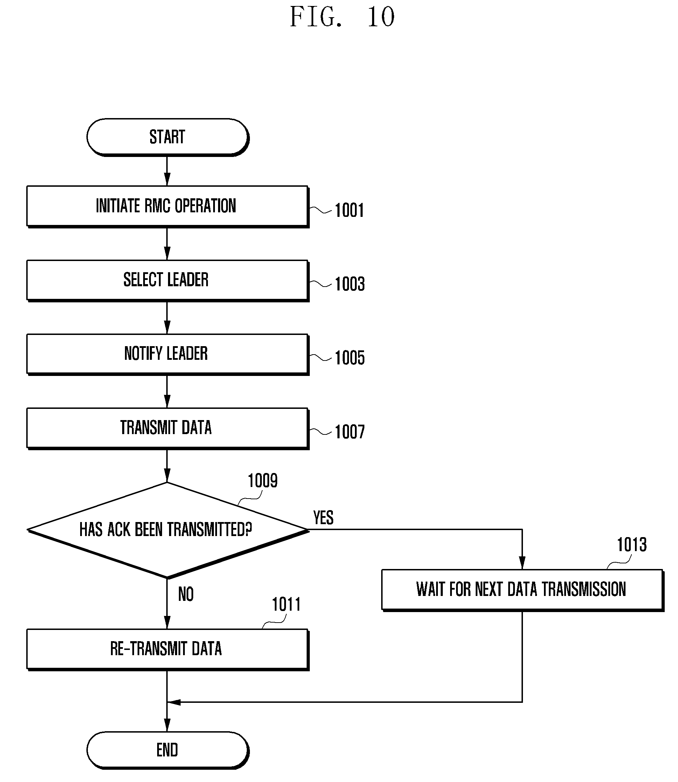

Fig. 10 is a flow diagram showing a method of transmitting data in an electronic device according to an embodiment of the present invention.

Referring to Fig. 10, the controller 180 of the electronic device may initiate an RMC operation in response to a data transmission request in operation 1001.

The controller 180 may select, as a leader, one of the other electronic devices in the network in operation 1003. According to an embodiment, the controller 180 may measure link quality of the neighboring electronic devices connected to each other in the network in response to the initiation of the RMC operation. The control unit 180 may measure link quality of the neighboring electronic devices based on the RSSI, PER, BER, RTT, Link Measure Request/Confirm (IEEE 802.11-2012, Chapter 6.3.34), or the like. The controller 180 may compare the measured link qualities of the neighboring electronic devices and select, as a leader, one of them that has the lowest (worst) link quality.

The controller 180 may transmit the data to the neighboring electronic devices in the network in operation 1005. The data may be transmitted in multicast or broadcast mode. The controller 180 may notify the leader selection, via the action frame, to the electronic device that is selected as a leader when transmitting the data or before transmitting the data (1005). The action frame may be transmitted in unicast mode or multicast/broadcast mode.

The controller 180 may determine whether the acknowledgment (ACK) in response to the data transmission has been received from the electronic device selected as a leader in operation 1009. According to an embodiment, the control unit 180 may check whether the acknowledgment (ACK) is received within a pre-defined period of time from a time point that the data is transmitted (e.g., a wait time for receiving an ACK from a reader).

When the acknowledgment (ACK) has not been received from the electronic device selected as a leader in operation 1009, the controller 180 may re-transmit the data in operation 1011. According to an embodiment, when the acknowledgment (ACK) is not received from the leader until a period of time has elapsed from a time point that the data is transmitted, the controller 180 may process a process related to the re-transmission of the data. In this case, the controller 180 may measure the link quality to process the leader re-selection based on the measured link quality.

On the other hand, when the acknowledgment (ACK) has been received from the electronic device selected as a leader in operation 1009, the controller 180 may determine to transmit the next data or wait for the data transmission in operation 1013.

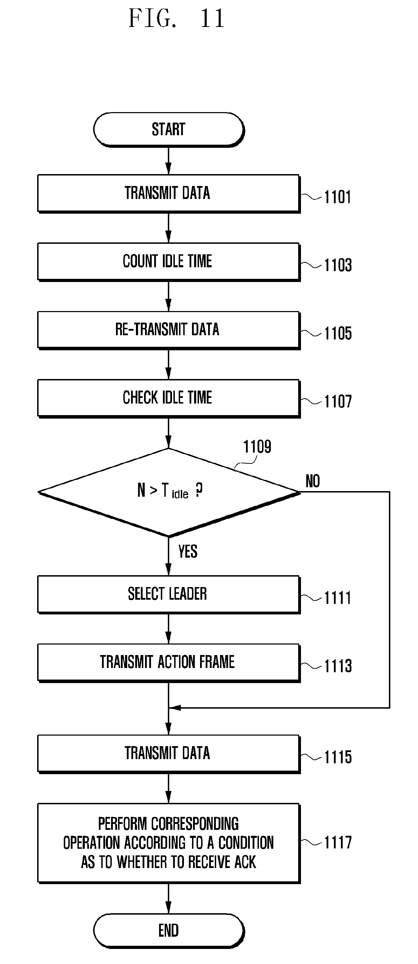

Fig. 11 is a flow diagram showing a method of transmitting data in an electronic device according to an embodiment of the present invention.

Referring to Fig. 11, the controller 180 may perform transmission of data in operation 1101, and then check the idle time (wait time) in operation 1103. According to an embodiment, the electronic devices on the network are guaranteed in mobility and this causes their link qualities to vary in real-time, respectively. When the stop of data transmission occurs after the data was transmitted, the controller 180 may count the wait time from the time point that the data transmission is stopped to a time point that the next data transmission is initiated.

The controller 180 may detect the start or re-start of data transmission in operation 1105.

When the controller 180 has detected the start or re-start of data transmission in operation 1105, it may check the counted wait time (e.g., N seconds) in operation 1107. The controller 180 may compare the counted wait time (e.g., N seconds) with a pre-defined idle time (e.g., T idle) to determine whether the counted wait time (e.g., N seconds) exceeds the pre-defined idle time (e.g., T_{idle}) in operation 1109.

When the controller 180 ascertains that the counted wait time (e.g., N seconds) has not exceeded the pre-defined idle time (e.g., T_{idle}) in operation 1109, it proceeds with operation 1115.

When the controller 180 ascertains that the counted wait time (e.g., N seconds) has exceeded the pre-defined idle time (e.g., T_{idle}), i.e., N>T_{idle}, in operation 1109, it may perform a leader selection operation in operation 1111. According to an embodiment, when the counted wait time (e.g., N seconds) has exceeded the pre-defined idle time (e.g., T_{idle}), i.e., N>T_{idle}, the control unit 180 may check link qualities of the neighboring electronic devices (including an electronic device that has been selected as a leader) on the network, and may process the reader re-selection.

The controller 180 may include information according to the leader re-selection in an action frame and transmit the action frame to a corresponding electronic device in operation 1113. In an embodiment, when the controller 180 selects a new leader from the previous leader, it may transmit, to the previous leader, the action frame including the information notifying the leadership termination; and to the newly selected leader, the action frame including the information notifying the leader selection.

The controller 180 may transmit the data to the neighboring electronic devices in the network in operation 1115. The controller 180 may control operations according to a condition as to whether an acknowledgement (ACK) has been received in response to the data transmission in operation 1117. According to an embodiment, when the controller 180 has not received the acknowledgment (ACK), it may control the operations related to re-transmission of the data. When the controller 180 has received the acknowledgment (ACK), it may control the operations related to transmission of the next data.

Each of the modules according to various embodiments of the present invention may be formed by software, firmware, hardware, or a combination thereof. One or all of the modules may be included in one entity, performing their functions respectively. The respective operations according to various embodiments of the present invention may be executed serially, repetitively or in parallel. Part of the operations may be skipped or executed with additional operations.

As described above, various embodiments of the present invention may be implemented with types of programming commands that can be executed via various computer tools and stored in computer-readable storage media. The computer-readable recording media contain program commands, data files, data structures, or the like, or a combination thereof. The program commands recorded in the recording media may be designed or configured to comply with the invention or may be software well-known to the ordinary person skilled in the art.

Examples of the computer-readable media include: magnetic media, such as hard disks, floppy disks, and magnetic tape; optical media such as Compact Disc Read Only Memory (CD-ROM) disks and Digital Versatile Disc (DVD); magneto-optical media, such as floptical disks; and hardware devices that are specially configured to store and perform program instructions, such as read-only memory (ROM), random access memory (RAM), flash memory, etc. Examples of program instructions include machine code instructions created by assembly languages, such as a compiler, and code instructions created by a high-level programming language executable in computers using an interpreter, etc. The described hardware devices may be configured to act as one or more software modules in order to perform the operations and methods described above, or vice versa.

The embodiments of the present invention described in the description and drawings are merely provided to assist in a comprehensive understanding of the invention and are not suggestive of limitation. Although embodiments of the invention have been described in detail above, it should be understood that many variations and modifications of the basic inventive concept herein described, which may be apparent to those skilled in the art, will still fall within the spirit and scope of the embodiments of the invention as defined in the appended claims.

## Claims

1. A data transmission method of an electronic device comprising:
selecting, as a leader, one from other electronic devices in a network;
transmitting data to the other electronic devices on the network;
determining a condition as to whether an acknowledgement (ACK) corresponding to the transmission of data is received from the electronic device selected as a leader; and
performing re-transmission of the data or waiting for transmission of the next data, according to the condition as to whether an acknowledgement (ACK) has been received.

2. The method of claim 1, wherein selecting an electronic device as a leader comprises:
determining a leader to provide an acknowledgement (ACK) in response to the reception of the data, based on link qualities correspond to the other electronic devices connected to each other on the network.

3. The method of claim 2, further comprising:
terminating the selected leader in response to variation of the link quality; and
re-selecting, as a leader, one of the other electronic devices, based on the variation in link quality.

4. The method of claim 2, wherein selecting an electronic device as a leader comprises:
determining an electronic device having the lowest link quality as the leader.

5. The method of claim 2, further comprising:
notifying the leader selection via an action frame previously defined when or before transmitting the data.

6. The method of claim 5, wherein notifying the leader selection comprises:
transmitting the leader selection notification to an electronic device selected as the leader in unicast mode.

7. The method of claim 5, wherein:
notifying the leader selection comprises transmitting the leader selection notification to the other electronic devices in multicast mode; and
the method further comprises: determining, by the other electronic devices, a condition as to whether a leader is selected according to information defined in the action frame.

8. The method of claim 1, further comprising:
counting an idle time (wait time) after the data is transmitted;
detecting a transmission start of the next data;
checking the counted idle time; and
re-selecting the leader according to the counted idle time.

9. The method of claim 8, further comprising:
determining the counted idle time (N seconds) based on a pre-defined idle time (T_{idle}); and
re-selecting a leader when the counted idle time exceeds the pre-define idle time.

10. The method of claim 9, wherein re-selecting a leader comprises:
including information according to the leader re-selection in an action frame and transmitting the action frame.

11. The method of claim 10, wherein transmitting the action frame comprises:
transmitting the action frame to a corresponding electronic device in unicast mode or to the other electronic devices in multicast mode; and
by the other electronic devices receiving the action frame in multicast, determining whether to perform leader selection or leadership termination, based on the information defined in the action frame.

12. The method of claim 11, wherein transmitting the action frame comprises:
when a new leader is re-selected from the leader that has been previously selected, transmitting an action frame including information notifying the leadership termination; and
transmitting an action frame including information notifying the leader selection.

13. The method of claim 1, wherein selecting an electronic device as a leader comprises:
selecting an electronic device as a leader in response to the trigger of the data.

14. The method of claim 1, wherein: selecting an electronic device as a leader comprises:
selecting an electronic device as a leader in response to the notification of activating a reliable multicast functionality from an electronic device that triggers multicast data.

15. A data communication system comprising:
an initiator for triggering data;
a transmitter for performing transmission of data;
one or more receivers for receiving the data transmitted from the transmitter; and
a leader for receiving the data transmitted from the transmitter and transmitting, to the transmitter, the acknowledgement (ACK) in response to the reception of the data.

16. The system of claim 15, wherein:
the initiator notifies the transmitter of the activation of a reliable multicast functionality; and
the notification is performed when there is a need to notify the activation of a reliable multicast functionality.

17. The system of claim 15, wherein the transmitter selects the leader based on link parameters accumulated by the receivers.

18. The system of claim 17, wherein the transmitter notifies the leader of the leader selection by transmitting, in unicast or multicast mode, an action frame pre-defined before transmitting the data.

19. The system of claim 15, wherein the leader is an electronic device operated in multicast mode and is selected, by the transmitter, as one of the receivers that has the lowest link quality.

20. The system of claim 16, wherein the reliable multicast functionality supports an infrastructure mode and Independent Basic Service Set (IBSS) mode.

21. The system of claim 20, wherein the initiator and the transmitter are the same electronic device in the IBSS mode.

22. The system of claim 15, wherein the initiator and the transmitter are the same electronic device or independent electronic devices in the infrastructure mode.

23. An electronic device comprising:
a wireless communication unit for supporting data communication over a network;
a storage unit for storing one or more programs related to the data communication; and
a controller comprising one or more processors for executing one or more programs to control data communication of electronic devices on the network,
wherein one or more programs perform:
selecting, as a leader, one from other electronic devices in a network;
transmitting data to the other electronic devices on the network;
determining a condition as to whether an acknowledgement (ACK) corresponding to the transmission of data is received from the electronic device selected as a leader; and
performing re-transmission of the data or waiting for transmission of the next data, according to the condition as to whether an acknowledgement (ACK) has been received.

24. The electronic device of claim 23, wherein the controller comprises:
a link measure module for measuring and managing link qualities of other electronic devices connected to each other on the network in real time;
a leader selection module for selecting the leader based on the link quality, when transmitting the data to the other electronic devices; and
a leader notification module for notifying an electronic device that the electronic device is selected as a leader, via a pre-defined action frame.

25. The electronic device of claim 24, wherein the leader selection module performs the leader re-selection according to the variation of link qualities of electronic devices.

26. The electronic device of claim 24, wherein the leader notification module notifies, when a leader is re-selected by the leader selection module, a previous leader or a newly selected leader of the leader re-selection via pre-defined action frames.

27. The electronic device of claim 26, wherein the leader notification module transmits the action frames in unicast or multicast mode.

28. A computer-readable recording medium storing software for executing the following:
selecting, as a leader, one from other electronic devices in a network;
transmitting data to the other electronic devices on the network;
determining a condition as to whether an acknowledgement (ACK) corresponding to the transmission of data is received from the electronic device selected as a leader; and
performing re-transmission of the data or waiting for transmission of the next data, according to the condition as to whether an acknowledgement (ACK) has been received.
